# EUROPEAN PATENT SPECIFICATION

(11) **EP 4 080 480 B1**
(45) Date of publication and mention of the grant of the patent: **25.11.2026**
(21) Application number: 21741573.6
(22) Date of filing: 07.01.2021
(51) Int. Cl.: G08G 1/0967, H04W 4/44, B60W 60/00, G06V 20/58, G06V 40/20

(54) **METHOD AND DEVICE FOR DETERMINING TRAFFIC INDICATION INFORMATION**
VERFAHREN UND VORRICHTUNG ZUM BESTIMMEN VON VERKEHRSANZEIGEINFORMATIONEN
PROCÉDÉ ET DISPOSITIF DE DÉTERMINATION D'INFORMATIONS D'INDICATION DE TRAFIC

(30) Priority: 16.01.2020 CN 202010049550
(43) Date of publication of application: 26.10.2022
(73) Proprietor: Yinwang Intelligent Technologies Co., Ltd., Shenzhen, Guangdong 518129 (CN)
(72) Inventor: ZHOU, Zheng, Shenzhen, Guangdong 518129 (CN)
(74) Representative: Pfenning, Meinig & Partner mbB
(86) International application number: PCT/CN2021/070609
(87) International publication number: WO 2021/143611

(56) References cited:
- EP-A1- 4 040 423
- WO-A1-2016/043781
- CN-A- 103 593 990
- CN-A- 104 504 917
- CN-A- 105 632 216
- CN-A- 105 654 045
- CN-A- 105 678 316
- DE-A1- 102015 004 605

## Description

### TECHNICAL FIELD

This application relates to the field of automated driving technologies, and in particular, to a traffic indication information determining method, apparatus, computer storage medium, and computer program product.

### BACKGROUND

In the automated driving technologies, traffic indication information in front of a running vehicle needs to be determined in real time, so that a road traffic rule is clarified by using the traffic indication information. Subsequently, traveling control information of the vehicle is generated with reference to the traffic indication information, to accurately control traveling of the vehicle.

In the prior art, a sensor used in an automated driving system recognizes only traffic signal light information. Therefore, only traffic signal light information in front of a running vehicle is obtained. Subsequently, traffic indication information is determined based on only the obtained traffic signal light information. In some application scenarios, traffic indication information commanded by a traffic police officer on the site has a higher priority. However, an existing sensor does not recognize the traffic indication information of the traffic police officer, and determines traffic indication information based on only the traffic signal light information. As a result, the determined traffic indication information is inaccurate, and a security risk exists when a vehicle travels based on the traffic indication information.

EP 4040423 describes an information fusion method applied to intelligent vehicles that includes: obtaining a plurality of sensing information sets, where each sensing information set includes information about at least one target, and different sensing information sets come from sensing systems of different devices; and when at least two sensing information sets in the plurality of sensing information sets include information about a first target, fuse the information about the first target in the at least two sensing information sets, to obtain fused information about the first target. In the method, information about a same target in a plurality of sources is fused to make the fused information about the target more accurate and effective.

CN 105678316 describes an active driving method based on multi-information fusion. In the driving process of a vehicle, a vision sensor is used for detecting a pedestrian in the surrounding environment, and also used for detecting traffic signal lamps, surrounding vehicles and the like; when the pedestrian is detected, whether the pedestrian is a traffic control personnel is judged, if so, actions of the traffic control personnel are recognized; the vision sensor is used for detecting ground traffic signs, acquiring a sign indicating strategy and sending the sign indicating strategy to a driving control module; a vehicle-mounted radar system and the vehicle-mounted vision sensor are used for detecting vehicles in front and at both sides as well as behaviors of the vehicles, judging the judgment on a current road condition of the surrounding vehicles according to their behaviors, and sending driving states of the surrounding vehicles to the driving control module.

DE102015004605A1 describes a method for operating complete automatic guide of mobile unit of motor car, involves evaluating relevance criterion of determined and/or general outgoing traffic order for mobile unit. The method involves evaluating the sensor data of an environmental sensor of a mobile unit for determining instruction data indicating the presence of an authorized person issuing traffic instructions and/or outgoing traffic order. The statement data and/or the sensor data are evaluated, upon detection of traffic statements. The relevance criterion of determined and/or general outgoing traffic order for mobile unit is evaluated, only if the relevance criterion of traffic statement accounted with complete automatic guide of mobile unit is satisfied.

### SUMMARY

Embodiments of this application provide a traffic indication information determining method and apparatus, to resolve a prior-art problem that traffic indication information used by a traveling vehicle is inaccurate because traffic indication information of a traffic police officer is not recognized.

According to a first aspect of the present invention, a traffic indication information determining method is provided according to to independent claim 1.

In this implementation, each of the n sensors is used to obtain one piece of first traffic indication information, to obtain a total of n pieces of first traffic indication information. Then, the second traffic indication information is determined based on the n pieces of first traffic indication information. The first traffic indication information is traffic indication information that is provided by the traffic command target (for example, a traffic police officer) and measured by each sensor. Each piece of the first traffic indication information may provide a road traffic rule for the vehicle. The second traffic indication information is more accurate traffic indication information of the traffic command target obtained by comprehensively considering the n pieces of first traffic indication information. It can be learned that, in this solution, the traffic indication information of the traffic command target can be recognized, and more traffic indication information is provided in a traveling process of the vehicle, so that the vehicle travels more safely.

With reference to the first aspect, the traffic command target is a traffic police officer.

In this implementation, because the traffic police officer, as the traffic command target, can analyze a traveling environment of the vehicle more flexibly and accurately, the vehicle can obtain more accurate traffic indication information, and traveling is safer.

With reference to the first aspect, in a possible implementation of the first aspect, the method further includes: obtaining, from the n sensors, at least one of confidence information, and tracking status information of the traffic command target that correspond to each piece of the first traffic indication information.

In this implementation, when the first traffic indication information is obtained, the confidence information, and the tracking status information of the traffic command target that correspond to the first traffic indication information are further obtained, and subsequently, traffic indication information used when the vehicle actually travels can be quickly and accurately determined based on the foregoing information. Applicability is better.

With reference to the first aspect, the method further includes: obtaining m pieces of third traffic indication information from the m sensors, where the third traffic indication information is traffic indication information determined based on the location information and the time information, and m is an integer greater than or equal to 1.

In this implementation, the m pieces of third traffic indication information may be obtained from the m sensors, and subsequently, the first traffic indication information may be checked based on the third traffic indication information, to obtain more accurate traffic indication information used for actual traveling of the vehicle.

With reference to the first aspect, the determining second traffic indication information based on the n pieces of first traffic indication information includes: determining the second traffic indication information based on the n pieces of first traffic indication information and the m pieces of third traffic indication information.

In this implementation, the m pieces of third traffic indication information obtained by using the m sensors are used to check the n pieces of first traffic indication information obtained by using the n sensors, to obtain more accurate second traffic indication information used for actual traveling of the vehicle, so that the vehicle travels more safely.

With reference to the first aspect, in a second possible implementation of the first aspect, the method further includes: obtaining traffic signal light information, where the traffic signal light information is used to determine the second traffic indication information.

In this implementation, both the traffic indication information of the traffic command target and the traffic signal light information are considered in the second traffic indication information used for actual traveling of the vehicle. The second traffic indication information is more accurate. It is safer when the vehicle travels based on the second traffic indication information.

According to a second aspect, an embodiment of this application provides an apparatus. The apparatus includes a processor. The processor is configured to: be coupled to a memory, read instructions in the memory, and perform, according to the instructions, the method in the first aspect and the possible implementations of the first aspect.

According to a third aspect, an embodiment of this application provides a computer storage medium. The computer storage medium stores instructions. When the instructions are run on a computer, the computer is enabled to perform some or all steps of the method in the first aspect and the possible implementations of the first aspect.

According to a fourth aspect, an embodiment of this application provides a computer program product. When the computer program product is run on a computer, the computer is enabled to perform some or all steps of the method in the first aspect and the possible implementations of the first aspect.

To resolve the prior-art problem that traffic indication information used by a traveling vehicle is inaccurate because traffic indication information of a traffic police officer is not recognized, embodiments of this application provide a traffic indication information determining method and apparatus. In the method, each of n sensors is used to obtain one piece of first traffic indication information, to obtain a total of n pieces of first traffic indication information. Then, second traffic indication information is determined based on the n pieces of first traffic indication information. The first traffic indication information is traffic indication information provided by a traffic command target (for example, a traffic police officer). Each piece of the first traffic indication information may provide a road traffic rule for a vehicle. The second traffic indication information is more accurate traffic indication information of the traffic command target obtained by comprehensively considering the n pieces of first traffic indication information. The vehicle travels according to a road traffic rule corresponding to the second traffic indication information. It can be learned that in the embodiments, the traffic indication information of the traffic command target can be recognized, and more traffic indication information is provided in a traveling process of the vehicle, so that the vehicle travels more safely.

### BRIEF DESCRIPTION OF DRAWINGS

FIG. 1 is a block diagram of a structure of a traffic indication information determining system according to an implementation of this application;
FIG. 2 is a schematic flowchart of a traffic indication information determining method according to an implementation of this application;
FIG. 3 is a schematic flowchart of a traffic indication information determining method according to another implementation of this application;
FIG. 4 is a block diagram of a structure of a traffic indication information determining apparatus according to an implementation of this application; and
FIG. 5 is a block diagram of a structure of a chip according to an implementation of this application.

### DESCRIPTION OF EMBODIMENTS

The following describes the technical solutions of this application with reference to accompanying drawings.

In descriptions of this application, unless otherwise specified, "/" means "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

It should be noted that, in this application, a term such as "example" or "for example" is used to represent giving an example, an illustration, or a description. Any embodiment or design solution described by using "example" or "for example" in this application shall not be construed as being more preferred or more advantageous than another embodiment or design solution. Exactly, use of the term such as "example" or "for example" is intended to present a related concept in a specific manner.

First, a traffic indication information determining system according to this application is described. A traffic indication information determining method according to this application may be implemented in the system.

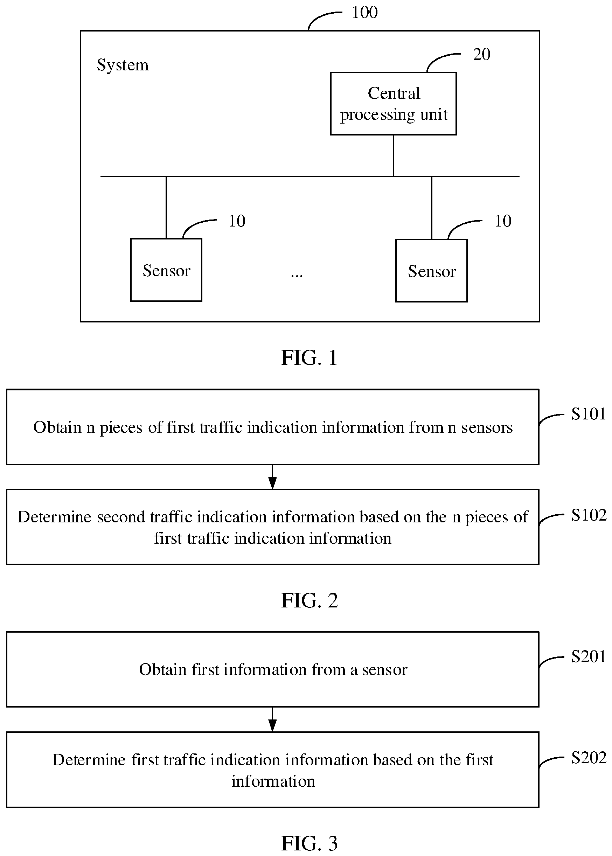

FIG. 1 is a block diagram of a structure of a traffic indication information determining system according to an implementation of this application. With reference to FIG. 1, it can be learned that the system 100 may include: a sensor 10 and a central processing unit 20. There may be at least one sensor 10. The sensor 10 may be a camera apparatus installed on a vehicle, and is configured to: capture an image of a traveling environment in which the vehicle is located, and determine traffic indication information of a traffic command target based on the captured image. The sensor 10 may alternatively be a radar installed on a vehicle, for example, a laser radar or an in-vehicle radar, configured to: emit a laser or an electromagnetic wave to the traveling environment in which the vehicle is located, generate radar detection information based on an echo of the laser or the electromagnetic wave, and determine traffic indication information of a traffic command target based on the radar detection information. According to an example not covered by the present invention, the sensor 10 may alternatively be a traffic command target control apparatus. The control apparatus may include a camera apparatus and/or a radar. The control apparatus may be configured to: obtain traffic indication information of a traffic command target, and transmit the traffic indication information to the central processing unit 20 by using a vehicle to everything (vehicle to X, V2X) apparatus connected to the control apparatus. According to an example not covered by the present invention, the sensor 10 may alternatively be a road side unit (road side unit, RSU) disposed in a road sign infrastructure. The road side unit may include a camera apparatus and/or a radar. The road side unit may be configured to: obtain traffic indication information of a traffic command target, and transmit the traffic indication information to the central processing unit 20 by using a V2X apparatus connected to the road side unit. The sensor 10 may be further configured to obtain traffic signal light information. The central processing unit 20 may be a central processing unit installed on the vehicle, and is configured to: obtain information transmitted by the sensor 10, and fuse the information transmitted by the sensor 10, to determine traffic indication information required when the vehicle actually travels.

The traffic command target may be a traffic police officer, or may be a device that has a function of replacing a traffic police officer to perform traffic command. This is not limited in this application. The traffic indication information is used to provide a road traffic rule for the vehicle.

A person skilled in the art may understand that the structure of the traffic indication information determining system shown in FIG. 1 does not constitute a limitation on the traffic indication information determining system in this application. The traffic indication information determining system in this application may include more or fewer components than those shown in the figure, or may combine some components, or may have different component arrangements. Components shown in the figure may be implemented in hardware, software, or a combination thereof.

The following describes embodiments of traffic indication information determining methods according to this application.

FIG. 2 is a schematic flowchart of a traffic indication information determining method according to an implementation of this application. An execution body of the method may be a central processing unit. With reference to FIG. 2, it can be learned that the method includes the following steps.

Step S101: Obtain n pieces of first traffic indication information from n sensors.

The first traffic indication information is used to indicate traffic indication information of a traffic command target, the traffic indication information is used to provide a road traffic rule for a vehicle, and n is an integer greater than or equal to 1. The obtaining n pieces of first traffic indication information from n sensors means that one piece of first traffic indication information is obtained from each of the n sensors, to obtain a total of n pieces of first traffic indication information.

There may be a plurality of implementations of obtaining the n pieces of first traffic indication information from the n sensors.

Optionally, the n sensors may be camera apparatuses, and the obtaining n pieces of first traffic indication information from n sensors may be implemented in the following manner: Each of the n camera apparatuses captures an image of a traveling environment in which the vehicle is located, to obtain n frames of images. Each of the n camera apparatuses obtains gesture information of the traffic command target based on the image obtained by the camera apparatus, to obtain n pieces of gesture information. Each of the n camera apparatuses determines first traffic indication information of the traffic command target based on the gesture information obtained by the camera apparatus, to obtain n pieces of first traffic indication information. Each of the n camera apparatuses sends the corresponding first traffic indication information to the central processing unit. The central processing unit receives the first traffic indication information sent by each of the n camera apparatuses, to obtain the n pieces of first traffic indication information.

The gesture information may include one or more of the following information: a direction and an angle of deflection of a hand of the traffic police officer towards a forearm, a direction and an angle of deflection of a forearm of the traffic police officer towards an upper arm, a direction and an angle of deflection of an upper arm of the traffic police officer towards the trunk, a direction and an angle of deflection between the head and the trunk of the traffic police officer, and an orientation of the trunk of the traffic police officer.

Optionally, the n sensors may alternatively be radars, and the obtaining n pieces of first traffic indication information from n sensors may alternatively be implemented in the following manner: Each of the n radars obtains radar detection information of the vehicle traveling environment, to obtain n pieces of radar detection information. Each of the n radars determines first traffic indication information of the traffic command target based on the radar detection information obtained by the radar, to obtain n pieces of first traffic indication information. Each of the n radars sends the corresponding first traffic indication information to the central processing unit. The central processing unit receives the first traffic indication information sent by each of the n radars, to obtain the n pieces of first traffic indication information.

According to an example not covered by the present invention, the n sensors may alternatively be traffic command target control apparatuses, and the obtaining n pieces of first traffic indication information from n sensors may alternatively be implemented in the following manner: The central processing unit receives n pieces of first traffic indication information sent by a V2X apparatus. The V2X apparatus is connected to the n traffic command target control apparatuses. The n traffic command target control apparatuses are configured to obtain the n pieces of first traffic indication information of the traffic command target.

According to an example not covered by the present invention, the n sensors may alternatively be RSUs disposed in a road sign infrastructure, and the obtaining n pieces of first traffic indication information from n sensors may alternatively be implemented in the following manner: The central processing unit receives n pieces of first traffic indication information sent by a V2X apparatus. The V2X apparatus is connected to the n RSUs. The n RSUs are configured to obtain the n pieces of first traffic indication information of the traffic command target.

The sensors may alternatively include n1 camera apparatuses, n2 radars. In addition, the n sensors may include n3 traffic command target control apparatuses, and n4 RSUs. n1, n2, n3, and n4 are all integers greater than or equal to 0, and n1 + n2 + n3 + n4 = n. The obtaining n pieces of first traffic indication information from n sensors may alternatively be implemented in the following manner: Each of the n1 camera apparatuses captures an image of the traveling environment in which the vehicle is located, to obtain n1 frames of images. Each of the n1 camera apparatuses obtains gesture information of the traffic command target based on the image obtained by the camera apparatus, to obtain n1 pieces of gesture information. Each of the n1 camera apparatuses determines first traffic indication information of the traffic command target based on the gesture information obtained by the camera apparatus, to obtain n1 pieces of first traffic indication information. Each of the n1 camera apparatuses sends the corresponding first traffic indication information to the central processing unit. The central processing unit receives the first traffic indication information sent by each of the n1 camera apparatuses, to obtain the n1 pieces of first traffic indication information. Each of the n2 radars obtains radar detection information of the traveling environment in which the vehicle is located, to obtain n2 pieces of radar detection information. Each of the n2 radars determines first traffic indication information of the traffic command target based on the radar detection information obtained by the radar, to obtain n2 pieces of first traffic indication information. Each of the n2 radars sends the corresponding first traffic indication information to the central processing unit. The central processing unit receives the first traffic indication information sent by each of the n2 radars, to obtain the n2 pieces of first traffic indication information. The central processing unit receives n3 pieces of first traffic indication information sent by a V2X apparatus. The V2X apparatus is connected to the n3 traffic command target control apparatuses. The n3 traffic command target control apparatuses are configured to obtain the n3 pieces of first traffic indication information of the traffic command target. The central processing unit receives n4 pieces of first traffic indication information sent by a V2X apparatus. The V2X apparatus is connected to the n4 RSUs. The n4 RSUs are configured to obtain the n4 pieces of first traffic indication information of the traffic command target. It should be noted that this application does not limit an execution sequence of the central processing unit receiving the n1 pieces of first traffic indication information sent by the n1 camera apparatuses, the central processing unit receiving the n2 pieces of first traffic indication information sent by the n2 radars, the central processing unit receiving the n3 pieces of first traffic indication information sent by the V2X apparatus, and the central processing unit receiving the n4 pieces of first traffic indication information sent by the V2X apparatus.

Step S102: Determine second traffic indication information based on the n pieces of first traffic indication information.

The second traffic indication information is traffic indication information actually used when the vehicle travels.

There may be a plurality of implementations of determining the second traffic indication information based on the n pieces of first traffic indication information.

Optionally, the determining second traffic indication information based on the n pieces of first traffic indication information may be implemented in the following manner: The central processing unit groups same first traffic indication information in the n pieces of first traffic indication information into a traffic indication information set, and the traffic indication information set is referred to as a first traffic indication information set in the following. The central processing unit determines first traffic indication information corresponding to a first traffic indication information set that includes a largest quantity of pieces of first traffic indication information as the second traffic indication information.

Optionally, when obtaining the corresponding first traffic indication information, each of the n sensors may further obtain at least one of confidence information, tracking status information, time information, and location information of the traffic command target that correspond to the first traffic indication information, and send the obtained at least one of confidence information, tracking status information, time information, and location information of the traffic command target that correspond to the first traffic indication information to the central processing unit. That is, when receiving the first traffic indication information sent by each of the n sensors, the central processing unit may further receive, from the sensor, the at least one of confidence information, tracking status information, time information, and location information of the traffic command target that correspond to the first traffic indication information.

The confidence information that corresponds to the first traffic indication information is used to indicate accuracy of the first traffic indication information. Higher confidence in the confidence information corresponds to higher accuracy of the first traffic indication information. The tracking status information that corresponds to the first traffic indication information is used to indicate whether the first traffic indication information is obtained for the first time. The time information that corresponds to the first traffic indication information is used to indicate an obtaining time of the first traffic indication information. The location information of the traffic command target that corresponds to the first traffic indication information is used to indicate location coordinates of the traffic command target in the traveling environment in which the vehicle is located when the first traffic indication information is obtained.

Based on this, the determining second traffic indication information based on the n pieces of first traffic indication information may alternatively be implemented in the following manner: The central processing unit determines, based on the confidence information of the n pieces of first traffic indication information, first traffic indication information with highest confidence in the n pieces of first traffic indication information as the second traffic indication information.

In addition, in some optional embodiments of this application, after receiving the n pieces of first traffic indication information sent by the n sensors, and the confidence information, the time information, and the location information of the traffic command target that correspond to each piece of the first traffic indication information, the central processing unit further sends the location information of the traffic command target and the time information to m sensors. The m sensors are different from the n sensors. That is, any one of the m sensors is different from any one of the n sensors, and m is an integer greater than or equal to 1.

Optionally, the central processing unit may send, to the m sensors, the time information and the location information of the traffic command target that correspond to the first traffic indication information with the highest confidence.

Optionally, the central processing unit may alternatively send, to the m sensors, the time information and the location information of the traffic command target that correspond to the first traffic indication information corresponding to the first traffic indication information set that includes the largest quantity of pieces of first traffic indication information.

Each of the m sensors may be a camera apparatus or a radar. After being turned on, the sensor may obtain an image or radar detection information of a vehicle traveling area. After receiving the location information of the traffic command target and the time information that are sent by the central processing unit, the sensor may determine, based on the location information of the traffic command target and the time information, traffic indication information from the obtained image or radar detection information, where the traffic indication information is referred to as third traffic indication information in the following.

After determining the corresponding third traffic indication information, each of the m sensors sends the third traffic indication information to the central processing unit. That is, the central processing unit may further receive the third traffic indication information sent by each of the m sensors, to obtain m pieces of third traffic indication information.

Based on this, the determining second traffic indication information based on the n pieces of first traffic indication information may alternatively be implemented in the following manner: Determine the second traffic indication information based on the n pieces of first traffic indication information and the m pieces of third traffic indication information.

Optionally, the determining the second traffic indication information based on the n pieces of first traffic indication information and the m pieces of third traffic indication information may be implemented in the following manner: The central processing unit groups same traffic indication information in the n pieces of first traffic indication information and the m pieces of third traffic indication information into a traffic indication information set, where the traffic indication information set is referred to as a second traffic indication information set in the following. The central processing unit determines traffic indication information corresponding to a second traffic indication information set that includes a largest quantity of pieces of traffic indication information as the second traffic indication information.

Optionally, when obtaining the corresponding third traffic indication information, each of the m sensors may further obtain at least one of confidence information, tracking status information, time information, and location information of the traffic command target that correspond to the third traffic indication information, and send the at least one of confidence information, tracking status information, time information, and location information of the traffic command target that correspond to the third traffic indication information to the central processing unit. That is, the central processing unit may further receive, from each of the m sensors, the at least one of confidence information, tracking status information, time information, and location information of the traffic command target that correspond to the third traffic indication information.

Based on this, the determining the second traffic indication information based on the n pieces of first traffic indication information and the m pieces of third traffic indication information may alternatively be implemented in the following manner: The central processing unit determines, based on the confidence information that corresponds to each of the n pieces of first traffic indication information and the confidence information that corresponds to each of the m pieces of third traffic indication information, traffic indication information with highest confidence in the n pieces of first traffic indication information and the m pieces of third traffic indication information as the second traffic indication information.

In addition, in the traffic indication information determining method according to this embodiment of this application, traffic signal light information may be further obtained by using a sensor. The central processing unit may further receive the traffic signal light information sent by the sensor. The sensor may be any one of the n sensors, or may be any one of the m sensors. The sensor may be different from any one of the n sensors and the m sensors.

Based on this, optionally, the determining second traffic indication information based on the n pieces of first traffic indication information may alternatively be implemented in the following manner: Determine the second traffic indication information based on the n pieces of first traffic indication information and the traffic signal light information. To be specific, fourth traffic indication information may be first determined based on the n pieces of first traffic indication information. For a specific implementation, refer to the content of determining the second traffic indication information based on the n pieces of first traffic indication information in the foregoing embodiment. Details are not described herein again. Then, the second traffic indication information is determined based on the traffic signal light information and the fourth traffic indication information.

The following uses an example to describe how to determine the second traffic indication information based on the n pieces of first traffic indication information and the traffic signal light information.

For example, a traveling vehicle needs to turn left, and a left-turning signal light in traffic signal lights in front of the current vehicle is green. In this case, the traffic signal light information obtained by the vehicle includes that the vehicle can turn left. However, due to traffic congestion at a front intersection, a traffic police officer at the intersection indicates to stop turning left currently. In this case, the fourth traffic indication information obtained by the vehicle by using the n sensors includes that the vehicle stops turning left, and the second traffic indication information determined by the vehicle based on the fourth traffic indication information and the traffic signal light information is that the vehicle temporarily stops turning left. After one minute, the left-turning signal light in the traffic signal lights in front of the vehicle is still green. Therefore, the traffic signal light information obtained by the vehicle still includes that the vehicle can turn left. In addition, the traffic police officer indicates that the vehicle can turn left currently. In this case, the fourth traffic indication information obtained by the vehicle includes that the vehicle can turn left, and the second traffic indication information determined by the vehicle based on the fourth traffic indication information and the traffic signal light information is that the vehicle can turn left.

Optionally, the determining second traffic indication information based on the n pieces of first traffic indication information may alternatively be implemented in the following manner: Determine the second traffic indication information based on the n pieces of first traffic indication information, the m pieces of third traffic indication information, and the traffic signal light information. For a specific implementation of determining the second traffic indication information based on the n pieces of first traffic indication information, the m pieces of third traffic indication information, and the traffic signal light information, refer to the content in the foregoing embodiment. Details are not described herein again.

In the traffic indication information determining method according to this embodiment of this application, each of n sensors is used to obtain one piece of first traffic indication information, to obtain a total of n pieces of first traffic indication information. Then, second traffic indication information is determined based on the n pieces of first traffic indication information. The first traffic indication information is traffic indication information provided by a traffic command target (for example, a traffic police officer). Each piece of the first traffic indication information may provide a road traffic rule for a vehicle. The second traffic indication information is more accurate traffic indication information of the traffic command target obtained by comprehensively considering the n pieces of first traffic indication information. The vehicle travels according to a road traffic rule corresponding to the second traffic indication information. It can be learned that, in this solution, the traffic indication information of the traffic command target can be recognized, and more traffic indication information is provided in a traveling process of the vehicle, so that the vehicle travels more safely.

FIG. 3 is a schematic flowchart of a traffic indication information determining method according to another implementation of this application. An execution body of the method is a central processing unit. With reference to FIG. 3, it can be learned that the method includes the following steps.

Step S201: Obtain first information from a sensor.

The first information includes first indication information, and the first indication information is used to indicate a traffic command target. The first information further includes detection information, and time information and location information that are in the detection information and that correspond to the traffic command target. The detection information may include an image of a traveling environment in which a vehicle is located and/or radar detection information.

After being turned on, the sensor may periodically obtain the first information, and then send the obtained first information to the central processing unit. That is, the central processing unit may receive the first information sent by the sensor.

Step S202: Determine first traffic indication information based on the first information.

The first traffic indication information is used to provide a road traffic rule for the vehicle. In this embodiment, the first traffic indication information provides the road traffic rule when the vehicle actually travels.

After receiving the first information sent by the sensor, the central processing unit may determine an identity of the traffic command target based on the first indication information in the first information, and determine, based on the time information and the location information that correspond to the detection information in the first information, a time for obtaining the first detection information, and a coordinate range of the traffic command target corresponding to the time in the detection information. Then, the central processing unit may determine, from the detection information based on the coordinate range of the traffic command target and the corresponding time, detection information of the traffic command target that corresponds to the time, and finally determine the first traffic indication information based on the detection information of the traffic command target.

There may be a plurality of implementations of determining the first traffic indication information based on the detection information of the traffic command target.

Optionally, the detection information may be the image of the traveling environment in which the vehicle is located. In this case, the detection information of the traffic command target may be an image of the traffic command target. The determining the first traffic indication information based on the detection information of the traffic command target may be implemented in the following manner: The central processing unit obtains gesture information of the traffic command target based on the image of the traffic command target, and determines the first traffic indication information based on the gesture information.

Optionally, the detection information may alternatively be the radar detection information. In this case, the detection information of the traffic command target may alternatively be radar detection information of the traffic command target. The determining the first traffic indication information based on the detection information of the traffic command target may be implemented in the following manner: The central processing unit determines the first traffic indication information based on the radar detection information of the traffic command target.

In addition, in the traffic indication information determining method according to this embodiment, a sensor may further obtain traffic signal light information. It should be noted that a same sensor may obtain the first information and the traffic signal light information, or different sensors may separately obtain the first information and the traffic signal light information. This is not limited in this application.

Based on this, the determining first traffic indication information based on the first information may alternatively be implemented in the following manner: Determine the first traffic indication information based on the first information and the traffic signal light information.

The determining the first traffic indication information based on the first information and the traffic signal light information may be implemented in the following manner: First, second traffic indication information is determined based on the first information. For a specific implementation, refer to the implementation of determining first traffic indication information based on the first information. Details are not described herein again. Then, the first traffic indication information is determined based on the second traffic indication information and the traffic signal light information. For a specific implementation, refer to the content in the embodiment shown in FIG. 2. Details are not described herein again.

In the traffic indication information determining method according to this embodiment, the central processing unit may obtain the first information from the sensor. The first information includes the first indication information, the detection information, and the time information and the location information that are in the detection information and that correspond to the traffic command target. After obtaining the first information, the central processing unit may determine, by using the first indication information in the first information, whether there is the traffic command target. When there is the traffic command target, the central processing unit may obtain, from the detection information based on the time information and the location information of the traffic command target, the traffic indication information of the traffic command target, namely, the first traffic indication information. The first traffic indication information may provide the road traffic rule for the vehicle. When there is the traffic command target (for example, a traffic police officer), the traffic indication information of the traffic command target usually has a highest priority. Therefore, it is safer when the vehicle travels according to the road traffic rule provided by the first traffic indication information.

The foregoing mainly describes the solutions according to embodiments of this application from a perspective of interaction between network elements. It may be understood that, to implement the foregoing functions, each network element, for example, the central processing unit or the sensor, includes a corresponding hardware structure or software module for performing each function, or a combination thereof. A person skilled in the art should be easily aware that, with reference to units and algorithm steps in the examples described in embodiments disclosed in this specification, this application can be implemented in a form of hardware or a combination of hardware and computer software. Whether a function is implemented by hardware or hardware driven by computer software depends on a particular application and a design constraint condition of the technical solutions. A person skilled in the art may use different methods to implement the described functions for each particular application, but it should not be considered that the implementation goes beyond the scope of this application.

In embodiments of this application, the central processing unit and the sensor may be divided into function modules based on the method examples. For example, each function module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and there may be another division during actual implementation. An example in which each function module is obtained through division based on each corresponding function is used below for description.

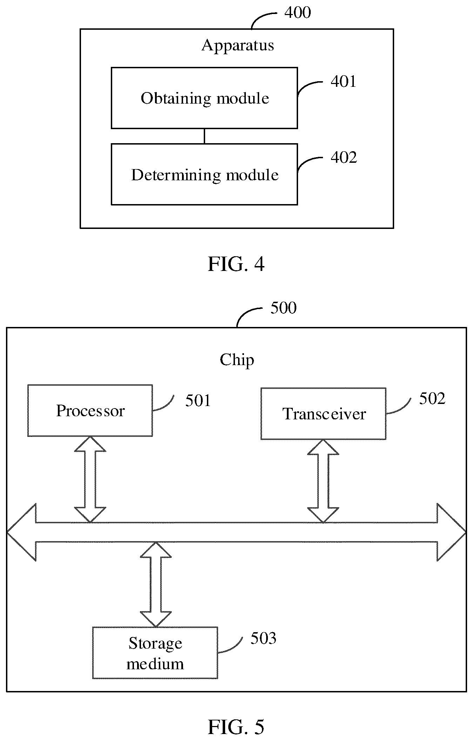

The foregoing describes in detail the methods according to embodiments of this application with reference to FIG. 2 and FIG. 3. The following describes in detail a traffic indication information determining apparatus according to embodiments of this application with reference to FIG. 4. It should be understood that descriptions of apparatus embodiments correspond to descriptions of the method embodiments. Therefore, for content not described in detail, refer to the method embodiments. For brevity, details are not described herein again.

FIG. 4 is a block diagram of a structure of a traffic indication information determining apparatus according to an implementation of this application. As shown in FIG. 4, the apparatus 400 may include an obtaining module 401 and a determining module 402. The apparatus 400 may be configured to perform an action performed by the central processing unit in the method embodiments, or may be configured to perform an action performed by the sensor in the method embodiments.

For example, in a possible design, the obtaining module 401 may be configured to obtain n pieces of first traffic indication information from n sensors, where the first traffic indication information is used to indicate traffic indication information of a traffic command target, the traffic indication information is used to provide a road traffic rule for a vehicle, and n is an integer greater than or equal to 1; and the determining module 402 may be configured to determine second traffic indication information based on the n pieces of first traffic indication information.

Optionally, the traffic command target is a traffic police officer.

Optionally, the obtaining module 401 may be further configured to obtain, from the n sensors, at least one of confidence information, tracking status information, time information, and location information of the traffic command target that correspond to each piece of the first traffic indication information.

Optionally, the apparatus 400 may further include a sending module, configured to send the location information of the traffic command target and the time information to m sensors. The m sensors are different from the n sensors.

Optionally, the obtaining module 401 may be further configured to obtain m pieces of third traffic indication information from the m sensors, where the third traffic indication information is traffic indication information determined based on the location information and the time information, and m is an integer greater than or equal to 1.

Optionally, the determining module 402 is specifically configured to determine the second traffic indication information based on the n pieces of first traffic indication information and the m pieces of third traffic indication information.

Optionally, the obtaining module 401 may be further configured to obtain traffic signal light information. The traffic signal light information is used to determine the second traffic indication information.

In another possible design, the obtaining module 401 may alternatively be configured to obtain first information from a sensor. The first information includes first indication information. The first indication information is used to indicate a traffic command target. The first information further includes detection information, and time information and location information that are in the detection information and that correspond to the traffic command target. The determining module 402 may alternatively be configured to determine first traffic indication information based on the first information, where the first traffic indication information is used to provide a road traffic rule for a vehicle.

Optionally, the traffic command target is a traffic police officer.

Optionally, the obtaining module 401 may be further configured to obtain traffic signal light information, and the determining module 402 may be further configured to determine the first traffic indication information based on the traffic signal light information and the first information.

That is, the apparatus 400 may implement corresponding steps or procedures performed by the central processing unit or the sensor in the method shown in FIG. 2 or FIG. 3 according to embodiments of this application. The apparatus 400 may include a module configured to perform the method performed by the central processing unit or the sensor in the method shown in FIG. 2 or FIG. 3. In addition, the modules in the apparatus 400 and the foregoing other operations and/or functions are separately configured to or used to implement corresponding steps of the method shown in FIG. 2 or FIG. 3. For example, in a possible design, the obtaining module 401 in the apparatus 400 may be configured to perform step S101 in the method shown in FIG. 2, and the determining module 402 may be configured to perform step S102 in the method shown in FIG. 2. In another possible design, the obtaining module 401 in the apparatus 400 may be configured to perform step S201 in the method shown in FIG. 3, and the determining module 402 may be configured to perform step S202 in the method shown in FIG. 3.

It should be understood that, a specific process of each module performing the corresponding step has been described in detail in the method embodiments. For brevity, details are not described herein again.

An embodiment of this application further provides a processing apparatus, including a processor and an interface. The processor may be configured to perform the methods in the method embodiments.

It should be understood that the processing apparatus may be a chip. FIG. 5 is a block diagram of a structure of a chip according to an implementation of this application. The chip shown in FIG. 5 may be a general-purpose processor, or may be a dedicated processor. The chip 500 includes a processor 501. The processor 501 may be configured to support the apparatus shown in FIG. 4 in performing the technical solution shown in FIG. 2, or configured to support the apparatus shown in FIG. 4 in performing the technical solution shown in FIG. 3.

Optionally, the chip may further include a transceiver 502. The transceiver 502 is configured to: receive control of the processor 501, to support the apparatus shown in FIG. 4 in performing the technical solution shown in FIG. 2, or support the apparatus shown in FIG. 4 in performing the technical solution shown in FIG. 3. Optionally, the chip shown in FIG. 5 may further include a storage medium 503.

It should be noted that the chip shown in FIG. 5 may be implemented by using the following circuits or components: one or more field programmable gate arrays (field programmable gate array, FPGA), programmable logic devices (programmable logic device, PLD), application specific integrated circuit (application specific integrated circuit, ASIC) chips, system on chips (system on chip, SoC), central processing units (central processor unit, CPU), network processors (network processor, NP), digital signal processing circuits (digital signal processor, DSP), micro controller units (micro controller unit, MCU), controllers, state machines, gate logic, discrete hardware components, any other suitable circuits, or any combination of circuits that can perform various functions described in this application.

In an implementation process, steps in the foregoing methods can be implemented by using a hardware integrated logical circuit in the processor, or by using instructions in a form of software. The steps of the methods disclosed with reference to embodiments of this application may be directly performed and completed by a hardware processor, or may be performed and completed by using a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the methods in combination with hardware in the processor. To avoid repetition, details are not described herein again.

It should be noted that the processor in embodiments of this application may be an integrated circuit chip, and has a signal processing capability. In an implementation process, the steps of the method embodiments can be implemented by using a hardware integrated logic circuit in the processor or by using software instructions. The foregoing processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the methods in combination with hardware in the processor.

It may be understood that, the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through exemplary but not limitative descriptions, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories in the system and the methods described in this specification include but are not limited to these memories and any memory of another suitable type.

Based on the methods according to embodiments of this application, embodiments of this application further provide a computer program product. The computer program product includes a computer program or instructions. When the computer program or the instructions is run on a computer, the computer is enabled to perform any method embodiment shown in FIG. 2 or FIG. 3.

Based on the methods according to embodiments of this application, embodiments of this application further provide a computer storage medium. The computer storage medium stores a computer program or instructions. When the computer program or the instructions is run on a computer, the computer is enabled to perform any method embodiment shown in FIG. 2 or FIG. 3.

The traffic indication information determining apparatus, the computer storage medium, the computer program product, and the chip according to embodiments of this application are all configured to perform the methods provided above. Therefore, for beneficial effects that can be achieved by the apparatus, the computer storage medium, the computer program product, and the chip, refer to beneficial effects corresponding to the method provided above. Details are not described herein again.

All or some of embodiments may be implemented by using software, hardware, firmware, or any combination thereof. When the software is used for implementation, all or some of embodiments may be implemented in a form of a computer program product. The computer program product includes one or more computer programs or instructions. When the computer programs or instructions are loaded and executed on a computer, all or some of the procedures or the functions in embodiments of this application are generated. The computer may be a general-purpose computer, a dedicated computer, a computer network, or another programmable apparatus. The computer programs or instructions may be stored in a computer-readable storage medium or may be transmitted from a computer-readable storage medium to another computer-readable storage medium. For example, the computer programs or instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disc (solid state disc, SSD)), or the like.

Terms such as "component", "module", and "system" used in this specification are used to indicate computer-related entities, hardware, firmware, combinations of hardware and software, software, or software being executed. For example, the component may be, but is not limited to, a process that is run on a processor, a processor, an object, an executable file, an execution thread, a program, and/or a computer. As illustrated by using the figures, both an application and a computing device that are run on a computing device may be components. One or more components may reside within a process and/or an execution thread, and the component may be located on one computer and/or distributed between two or more computers. In addition, these components may be executed from various computer-readable media that store various data structures. For example, the components may communicate by using a local and/or remote process and according to, for example, a signal having one or more data packets (for example, data from two components interacting with another component in a local system, a distributed system, and/or across a network such as the Internet interacting with other systems by using the signal).

A person of ordinary skill in the art may be aware that, various illustrative logical blocks (illustrative logical block) and steps (step) that are described with reference to embodiments disclosed in this specification can be implemented by electronic hardware or a combination of computer software and electronic hardware. Whether the functions are implemented by hardware or software depends on a particular application and a design constraint condition of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the method embodiments. Details are not described herein again.

In the several embodiments according to this application, it should be understood that the disclosed system, apparatuses, and methods may be implemented in another manner. For example, the described apparatus embodiment is merely an example. For example, division into the modules is merely logical function division and there may be another division manner during actual implementation. For example, a plurality of modules or components may be combined or integrated into another system, or some features may be ignored or not implemented. In addition, displayed or discussed mutual couplings or direct couplings or communication connections may be implemented by using some interfaces. Indirect couplings or communication connections between apparatuses or units may be implemented in an electrical, a mechanical, or another form.

The modules described as discrete components may or may not be physically separate, and components displayed as the modules may or may not be physical units. That is, the components may be located in one position, or may be distributed on a plurality of network units. The embodiment solutions may be implemented by selecting some or all of the units based on actual requirements.

In addition, functional modules in embodiments of this application may be integrated into one processing unit, or each of the modules may stand alone physically, or two or more modules may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or a compact disc.

It should be understood that, in embodiments of this application, an execution sequence of the steps should be determined based on functions and internal logic of the steps. Sequence numbers of the steps do not mean the execution sequence, and do not constitute any limitation on an implementation process of embodiments.

All parts in this specification are described in a progressive manner, for same or similar parts in embodiments, embodiments may refer to each other, and each embodiment focuses on a difference from the other embodiments. Especially, embodiments of the traffic indication information determining apparatus, the computer storage medium, the computer program product, and the chip are basically similar to the method embodiments, and therefore are described briefly. For related parts, refer to descriptions in the method embodiments.

Although some preferred embodiments of this application have been described, a person skilled in the art can make changes and modifications to these embodiments once the person skilled in the art learns of a basic creative concept.

The scope of the present invention is defined by the appended claims.

## Claims

1. A traffic indication information determining method executed by a central processing unit installed on a vehicle, the method comprising:
obtaining (S101) n pieces of first traffic indication information from n sensors, wherein the first traffic indication information is used to indicate traffic indication information of a traffic command target, the traffic command target is a traffic police officer or is a device that has a function of replacing a traffic police officer to perform traffic command, the traffic indication information is used to provide a road traffic rule for the vehicle, and n is an integer greater than or equal to 1;
obtaining, from the n sensors, time information and location information of the traffic command target that correspond to each piece of the first traffic indication information;
sending the location information of the traffic command target and the time information to m sensors, wherein the m sensors are different from the n sensors, and m is an integer greater than or equal to 1;
obtaining, from the m sensors, m pieces of third traffic indication information, wherein the third traffic indication information is determined based on the location information and the time information; and
determining second traffic indication information based on the n pieces of first traffic indication information and the m pieces of third traffic indication information;
wherein the vehicle is adapted to travel according to a road traffic rule corresponding to the second traffic indication information;
wherein the n sensors comprise at least one camera apparatus installed on the vehicle and/or at least one radar installed on the vehicle; and
wherein the m sensors comprise at least one camera apparatus installed on the vehicle and/or at least one radar installed on the vehicle.

2. The method according to claim 1, wherein the method further comprises:
obtaining, from the n sensors, at least one of confidence information and tracking status information of the traffic command target that correspond to each piece of the first traffic indication information.

3. The method according to any one of claims 1 to 2, wherein the method further comprises:
obtaining traffic signal light information, wherein the traffic signal light information is used to determine the second traffic indication information.

4. An apparatus, wherein the apparatus comprises a processor, and the processor is configured to: be coupled to a memory, read instructions in the memory, and perform, according to the instructions, the method according to any one of claims 1 to 3.

5. An apparatus according to claim 4, wherein the apparatus is a chip.

6. A computer storage medium, wherein the computer storage medium stores instructions, and when the instructions are run on a computer, the computer is enabled to perform the method according to any one of claims 1 to 3.

7. A computer program product, wherein when the computer program product is run on a computer, the computer is enabled to perform the method according to any one of claims 1 to 3.

## Patentansprüche

1. Bestimmungsverfahren für Verkehrsangabeinformationen, das durch eine zentrale Verarbeitungseinheit, die auf einem Fahrzeug installiert ist, ausgeführt wird, wobei das Verfahren Folgendes umfasst:
Erlangen (S101) von n Elementen erster Verkehrsangabeinformationen von n Sensoren, wobei die ersten Verkehrsangabeinformationen dazu verwendet werden, Verkehrsangabeinformationen eines Verkehrssteuerungsziels anzugeben, das Verkehrssteuerungsziel ein Verkehrspolizist ist oder eine Vorrichtung ist, die eine Funktion von Ersetzen eines Verkehrspolizisten, um eine Verkehrssteuerung durchzuführen, erfüllt, die Verkehrsangabeinformationen dazu verwendet werden, eine Straßenverkehrsregel für das Fahrzeug bereitzustellen, und n eine Ganzzahl größer oder gleich 1 ist;
Erlangen, von den n Sensoren, von Zeitinformationen und Standortinformationen des Verkehrssteuerungsziels, die jedem Element der ersten Verkehrsangabeinformationen entsprechen; Senden der Standortinformationen des Verkehrssteuerungsziels und der Zeitinformationen an m Sensoren, wobei die m Sensoren sich von den n Sensoren unterscheiden und m eine Ganzzahl größer oder gleich 1 ist;
Erlangen, von den m Sensoren, von m Elementen dritter Verkehrsangabeinformationen, wobei die dritten Verkehrsangabeinformationen basierend auf den Standortinformationen und den Zeitinformationen bestimmt werden; und
Bestimmen zweiter Verkehrsangabeinformationen basierend auf den n Elementen erster Verkehrsangabeinformationen und den m Elementen dritter Verkehrsangabeinformationen;
wobei das Fahrzeug dazu angepasst ist, gemäß einer Straßenverkehrsregel, die den zweiten Verkehrsangabeinformationen entspricht, zu fahren;
wobei die n Sensoren mindestens eine Kameraeinrichtung, die auf dem Fahrzeug installiert ist, und/oder mindestens ein Radar, das auf dem Fahrzeug installiert ist, umfassen; und
wobei die m Sensoren mindestens eine Kameraeinrichtung, die auf dem Fahrzeug installiert ist, und/oder mindestens ein Radar, das auf dem Fahrzeug installiert ist, umfassen.

2. Verfahren nach Anspruch 1, wobei das Verfahren ferner Folgendes umfasst:
Erlangen, von den n Sensoren, mindestens eines aus Vertrauensinformationen und Trackingstatusinformationen des Verkehrssteuerungsziels, die jedem Element der ersten Verkehrsangabeinformationen entsprechen.

3. Verfahren nach einem der Ansprüche 1 bis 2, wobei das Verfahren ferner Folgendes umfasst:
Erlangen von Verkehrsampelinformationen, wobei die Verkehrsampelinformationen dazu verwendet werden, die zweiten Verkehrsangabeinformationen zu bestimmen.

4. Einrichtung, wobei die Einrichtung einen Prozessor umfasst und der Prozessor zu Folgendem konfiguriert ist: mit einem Speicher gekoppelt zu sein, Anweisungen aus dem Speicher zu lesen und das Verfahren nach einem der Ansprüche 1 bis 3 gemäß den Anweisungen durchzuführen.

5. Einrichtung nach Anspruch 4, wobei die Einrichtung ein Chip ist.

6. Computerspeichermedium, wobei das Computerspeichermedium Anweisungen speichert und, wenn die Anweisungen auf einem Computer laufen, der Computer in die Lage versetzt wird, das Verfahren nach einem der Ansprüche 1 bis 3 durchzuführen.

7. Computerprogrammprodukt, wobei, wenn das Computerprogrammprodukt auf einem Computer läuft, der Computer in die Lage versetzt wird, das Verfahren nach einem der Ansprüche 1 bis 3 durchzuführen.

## Revendications

1. Procédé de détermination d'informations d'indication de trafic exécuté par une unité de traitement centrale installée sur un véhicule, le procédé comprenant :
l'obtention (S101) de n éléments de premières informations d'indication de trafic à partir de n capteurs, dans lequel les premières informations d'indication de trafic sont utilisées pour indiquer des informations d'indication de trafic d'une cible de commande de trafic, la cible de commande de trafic est un agent de police de trafic ou un dispositif qui a une fonction de remplacement d'un agent de police de trafic pour réaliser une commande de trafic, les informations d'indication de trafic sont utilisées pour fournir une règle de trafic routier au véhicule, et n est un entier supérieur ou égal à 1 ;
l'obtention, à partir des n capteurs, d'informations temporelles et d'informations de localisation de la cible de commande de trafic qui correspondent à chaque élément des premières informations d'indication de trafic ;
l'envoi des informations de localisation de la cible de commande de trafic et des informations temporelles à m capteurs, dans lequel les m capteurs sont différents des n capteurs, et m est un entier supérieur ou égal à 1 ;
l'obtention, à partir des m capteurs, de m éléments de troisièmes informations d'indication de trafic, dans lequel les troisièmes informations d'indication de trafic sont déterminées sur la base des informations de localisation et des informations temporelles ; et
la détermination de deuxièmes informations d'indication de trafic sur la base des n éléments de premières informations d'indication de trafic et des m éléments de troisièmes informations d'indication de trafic ;
dans lequel le véhicule est adapté pour voyager selon une règle de trafic routier correspondant aux deuxièmes informations d'indication de trafic ;
dans lequel les n capteurs comprennent au moins un appareil de caméra installé sur le véhicule et/ou au moins un radar installé sur le véhicule ; et
dans lequel les m capteurs comprennent au moins un appareil de caméra installé sur le véhicule et/ou au moins un radar installé sur le véhicule.

2. Procédé selon la revendication 1, dans lequel le procédé comprend en outre :
l'obtention, à partir des n capteurs, d'au moins l'une des informations de confiance et des informations d'état de suivi de la cible de commande de trafic qui correspondent à chaque élément des premières informations d'indication de trafic.

3. Procédé selon l'une quelconque des revendications 1 et 2, dans lequel le procédé comprend en outre :
l'obtention d'informations de feux de signalisation de trafic, dans lequel les informations de feux de signalisation de trafic sont utilisées pour déterminer les deuxièmes informations d'indication de trafic.

4. Appareil, dans lequel l'appareil comprend un processeur, et le processeur est configuré pour : être couplé à une mémoire, lire des instructions dans la mémoire, et réaliser, selon les instructions, le procédé selon l'une quelconque des revendications 1 à 3.

5. Appareil selon la revendication 4, dans lequel l'appareil est une puce.

6. Support de stockage informatique, dans lequel le support de stockage informatique stocke des instructions, et lorsque les instructions sont exécutées sur un ordinateur, l'ordinateur est activé pour réaliser le procédé selon l'une quelconque des revendications 1 à 3.

7. Produit de programme informatique, dans lequel lorsque le produit de programme informatique est exécuté sur un ordinateur, l'ordinateur est activé pour réaliser le procédé selon l'une quelconque des revendications 1 à 3.
